# EUROPÄISCHE PATENTSCHRIFT

(11) **EP 2 979 849 B1**
(45) Veröffentlichungstag und Bekanntmachung des Hinweises auf die Patenterteilung: **11.10.2017**
(21) Anmeldenummer: 15171023.3
(22) Anmeldetag: 08.06.2015
(51) Int. Cl.: B29C 67/00, B33Y 30/00

(54) **VORRICHTUNG ZUR HERSTELLUNG DREIDIMENSIONALER OBJEKTE DURCH SUKZESSIVES VERFESTIGEN VON SCHICHTEN**
DEVICE FOR PRODUCTION OF THREE-DIMENSIONAL OBJECTS BY SUCCESSIVE SOLIDIFYING OF LAYERS
DISPOSITIF DESTINE A PRODUIRE DES OBJETS TRIDIMENSIONNELS PAR SOLIDIFICATION SUCCESSIVE DE COUCHES

(30) Priorität: 28.07.2014 DE 102014010934
(43) Veröffentlichungstag der Anmeldung: 03.02.2016
(73) Patentinhaber: CL Schutzrechtsverwaltungs GmbH, 96215 Lichtenfels (DE)
(72) Erfinder: Herzog, Frank, 96215 Lichtenfels (DE)
(74) Vertreter: Kohl, Fabian Hanno

(56) Entgegenhaltungen:
- WO-A1-2014/199149
- DE-A1-102013 103 096
- US-A1- 2003 052 105
- US-A1- 2013 112 672

## Beschreibung

Die Erfindung betrifft eine Vorrichtung zur Herstellung dreidimensionaler Objekte durch sukzessives Verfestigen von Schichten eines mittels elektromagnetischer Strahlung oder Teilchenstrahlung verfestigbaren Aufbaumaterials, an den dem jeweiligen Querschnitt des Objektes entsprechenden Stellen.

Eine derartige Vorrichtung, auch als Lasersinter- oder Laserschmelzvorrichtung bezeichnet, weist ein Gehäuse mit einer Öffnung auf, wobei durch die Öffnung des Gehäuses auf den Innenbereich zugegriffen werden kann. Innerhalb des Gehäuses ist eine Baukammer angeordnet, in der eine Tragevorrichtung zum Tragen des zu bauenden Objektes vorgesehen ist. Das Baumaterial wird über eine Beschichtungsvorrichtung schichtweise auf die Tragevorrichtung, eine darauf liegende Bauplatte oder auf bereits hergestellte oder eingebrachte Baumaterialschichten oder Schichten des Objektes aufgetragen. Eine Bestrahlungseinrichtung dient zum Bestrahlen der aufgetragenen Schicht des Aufbaumaterials an den Stellen, die dem Querschnitt des Objektes entsprechen. Die Bestrahlungseinrichtung weist wenigstens einen Scanner zur Ablenkung der Strahlung einer Strahlungsquelle auf, wobei der Scanner über der Baukammer verfahrbar gelagert ist.

Als Stand der Technik ist es bereits bekannt, z. B. zwei Scanner für unterschiedliche Strahlungsquellen oder unterschiedliche Strahlungsdurchmesser über der Bauebene einer Baukammer zu verfahren.

US 2013/0112672 A1 offenbart eine additive Herstellungsanordnung, welche einen in mehrere separate Regionen unterteilten Arbeitsbereich und eine Energieeinbringungseinrichtung zur Fokussierung eines Energiestrahls auf eine bestimmten Bereich innerhalb einer der separaten Regionen umfasst. Ferner ist eine Splittereinrichtung zur Aufteilung des Energiestrahls zur Fokussierung desselben in einen Bereich innerhalb wenigstens zweier separater Bereiche vorgesehen.

Der Erfindung liegt die Aufgabe zugrunde, eine Vorrichtung mit den Merkmalen des Oberbegriffes des Anspruches 1 derart auszubilden, dass der Bauvorgang schneller erfolgen kann und die Vorrichtung hinsichtlich der Scanner einfacher ausgebildet ist und damit preisgünstiger herzustellen ist. Diese Aufgabe wird durch eine Vorrichtung mit den Merkmalen des Anspruches 1 gelöst. Vorteilhafter Weise ist die Mehrzahl der Scanner äquidistant auf dem Trägerelement angeordnet und die Scanner sind als Zeilenscanner ausgebildet, deren Spiegel eine Strahlablenkung in nur einer Richtung bewirken.

Mit einer derartigen Ausbildung kann durch die Mehrzahl der Scanner ein sehr großes Baufeld simultan durch Überfahren des Trägerelementes belichtet werden, die Scanner bringen in den im wesentlichen unter ihnen liegenden Baufeldbereichen zeilenartige Energieeinträge ein, die sich ggf. randseitig überlappen können und damit der Bauprozess insgesamt beschleunigt werden kann. Die Scanner sind mit optischen Schaltern versehen, sodass sie je nach Lage und Position des Scanners über dem Baufeld ein- und ausgeschaltet werden können.

Es ist auch möglich, jedem Scanner eine separate Strahlquelle zuzuordnen, die dann entsprechend ein- und ausgeschaltet werden kann, wenn der Scanner programmgemäß zur Belichtung eines unter ihm liegenden Baufeldbereiches angesteuert wird. Die Ablenkung der Scanner in nur einer Richtung lässt sich mit relativ einfach aufgebauten Scannern durchführen, vorteilhafter Weise sind die Scanner Zeilenscanner. Aber auch bei Verwendung herkömmlicher Scanner mit zwei ansteuerbaren Spiegeln lässt sich eine Vereinfachung der Vorrichtung dadurch erreichen, dass die Scanner durch Betrieb nur eines ihrer Spiegel als Zeilenscanner betrieben werden.

Jedem, insbesondere streifenartigen Bereich unter den Scannern können wenigstens zwei Scanner zugeordnet werden, durch welche der unter ihnen liegende streifenartige Bereich selektiv mit zeilenartigen Energieeinträgen beaufschlagt werden kann, wobei die Energieeinträge unterschiedliche Richtungen aufweisen. Dadurch ist ein sogenanntes "Cross Hedging" möglich, wobei die Scanner immer nur in einer festgelegten Richtung arbeiten.

In Weiterbildung der Erfindung ist es auch möglich, die Mehrzahl der Scanner einzeln, in Gruppen oder in ihrer Gesamtheit derart verschwenkbar oder verdrehbar auf dem Trägerelement zu lagern, dass die Richtung der durch sie erzeugten zeilenartigen Energieeinträge verändert werden kann. Dies ist z. B. dadurch möglich, dass jeder Scanner um eine Vertikalachse verdrehbar auf dem Trägerelement gelagert ist und die Scanner z. B. durch kleine Servomotoren, durch eine kollektive Gestängeverschwenkung oder dgl. verschwenkt werden. Nach Belichtung einer (oder mehrerer) Schicht(en) erfolgt eine Verschwenkung, sodass sich übereinander liegende Energieeinträge kreuzen.

Erfindungsgemäß ist vorgesehen, dass Trägerelement insgesamt zu verschwenken, sodass bei den unterschiedlichen Belichtungsvorgängen Energieeinträge mit unterschiedlichen Winkeln in den gleichen Bereich eingebracht werden können.

Es ist zudem vorteilhaft, das langgestreckte Trägerelement in seiner Längsrichtung zu verschieben, sodass beispielsweise in einer ersten Verschiebestellung ein erster Scanner über einem Bereich angeordnet ist, der in einer ersten Richtung arbeitet und nach Verschiebung des Trägerelementes in die zweite Verschiebestellung ein anderer Scanner wirksam wird, dessen Spiegel so angeordnet ist, dass er einen Eintrag in einer bis zum ersten Energieeintrag winkeligen Richtung im gleichen Bereich vornimmt.

Wie oben bereits angemerkt, können die Scanner einzeln oder in Gruppen an den Ausgang wenigstens einer Strahlungsquelle angekoppelt werden. Denkbar sind aber auch Laser mit relativ kleiner Leistung, wobei jedem Scanner ein eigener Laser zugeordnet ist. Es ist aber auch möglich, einen Hochleistungslaser gemeinsam für alle Scanner heranzuziehen und über Strahlteilung, Strahlauskopplung und ggf. Shutter-Vorrichtungen den Scannern zugeführten Laserstrahl ein- und auszuschalten.

Es liegt auch im Rahmen der Erfindung, zwei Gruppen von Scannern auf wenigstens zwei langgestreckten Trägerelementen anzuordnen, die in der ersten Richtung über dem Baufeld verfahrbar sind. Dies empfiehlt sich bei besonders großen Anlagen mit großen Baufeldern, dann kann beispielsweise die erste Scannergruppe die linke Seite des Baufeldes belichten und die zweite Gruppe von Scannern die rechte Baufeldseite. Gleichzeitig ist es natürlich denkbar, auch drei Trägerelemente mit drei Scannergruppen in einer Ebene, ggf. auf ein und derselben Führungseinrichtung hin und her verschiebbar anzuordnen. Dies kann für eine weitere Beschleunigung eines Belichtungsverfahrens vorteilhaft sein. Es ist auch möglich, den Gruppen von Scannern auf den unterschiedlichen Trägerelementen unterschiedliche optische Eigenschaften, unterschiedliche Laser, unterschiedliche Fokus-Durchmesser und dgl. zuzuordnen, sodass hinsichtlich der Belichtung des Baufeldes eine verbesserte Variationsmöglichkeit gegeben ist.

In vorteilhafter Weiterbildung ist über der Verfahrebene des wenigstens einen Trägerelementes eine weitere, obere Trägerelementanordnung vorgesehen, an welcher wenigstens ein in X- und Y-Richtung verfahrbares Strahlablenkungselement angeordnet ist. Selbstverständlich ist es auch denkbar, dass die weitere Trägerelementanordnung auch unter der Verfahrebene des ersten Trägerelementes angeordnet ist. Wichtig ist, ein weiteres vereinfachtes Strahlablenkungselement zur Verfügung zu haben, das den Strahl einer Strahlungsquelle i. W. senkrecht nach unten auf das Baufeld lenkt, um beispielsweise umrandende Bestrahlungen und dgl. mit hoher Leistung und Genauigkeit vornehmen zu können, damit eine besonders intensive und vollständige Aufschmelzung des Baumaterials im Hüllbereich eines Werkstückes vorgenommen werden kann.

Die Ansprüche 12 - 14 beschreiben ein Verfahren, das auf der Vorrichtung gemäß Ansprüchen 1 - 11 mit Vorteil durchgeführt werden kann.

Die Erfindung ist anhand vorteilhafter Ausführungsbeispiele in den Zeichnungsfiguren näher erläutert. Diese zeigen:

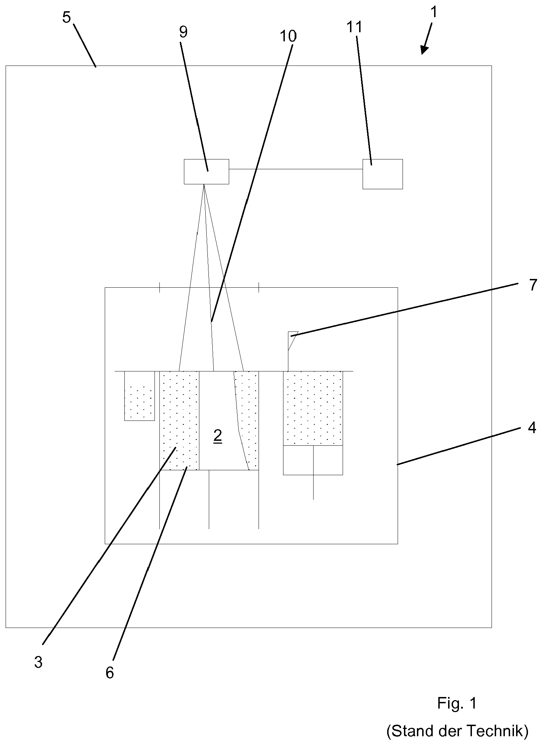

- Fig. 1: eine schematische Schnittdarstellung durch eine SLM- oder SLS-Vorrichtung nach dem Stand der Technik;

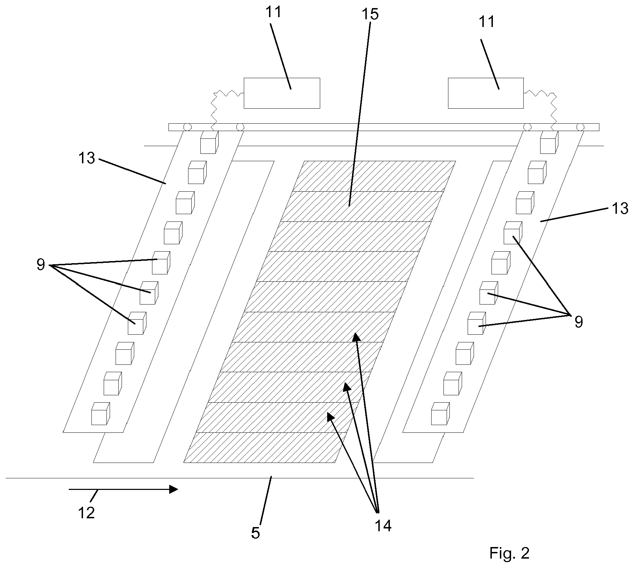

- Fig. 2: eine schematische perspektivische Darstellung einer erfindungsgemäßen Vorrichtung mit zwei Scannergruppen, die auf zwei identischen Trägerelementen angeordnet sind und in einer ersten Richtung verfahrbar sind;

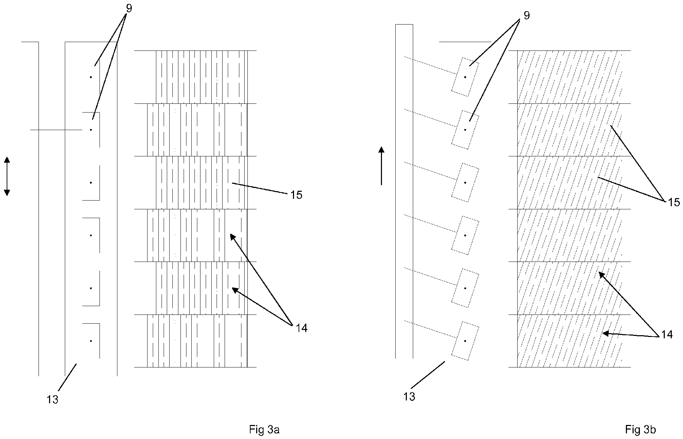

- Fig. 3a: eine erste schematische Darstellung von verdrehbar auf dem Trägerelement angeordneten Scannern in einer ersten Drehstellung zum Eintrag von zeilenartigen Energieeinträgen in nebeneinanderliegende Bereiche, wobei die Energieeinträge rechtwinkelig zur Verfahrrichtung des Trägerelementes angeordnet sind;
- Fig. 3b: eine Darstellung gemäß Fig. 3a, mit etwas verschwenkten Scannern zur Einbringung von Energieeinträgen in ein und dieselben Bereiche, deren Richtung verändert ist;

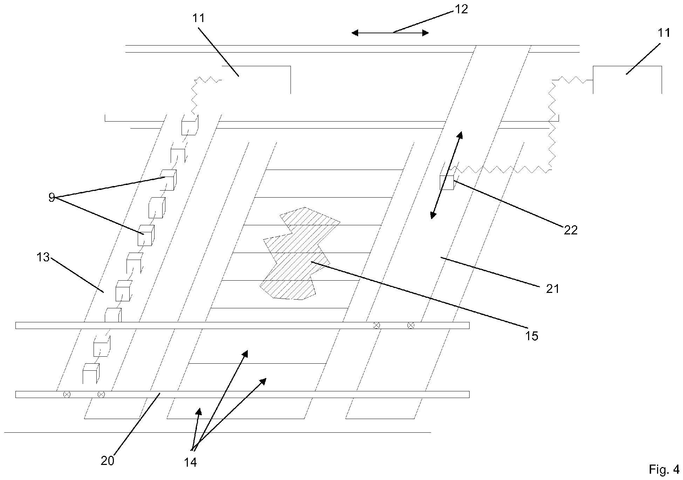

- Fig.4: eine schematische Darstellung einer Vorrichtung mit nur einem Trägerelement mit einer ersten Scannergruppe und einem weiteren Trägerelement, das ebenfalls in der ersten Richtung verfahrbar gelagert ist und auf dem verschiebbar ein Strahlablenkungselement angeordnet ist, mit welchem ein Laserstrahl i. W. senkrecht nach unten gelenkt werden kann;

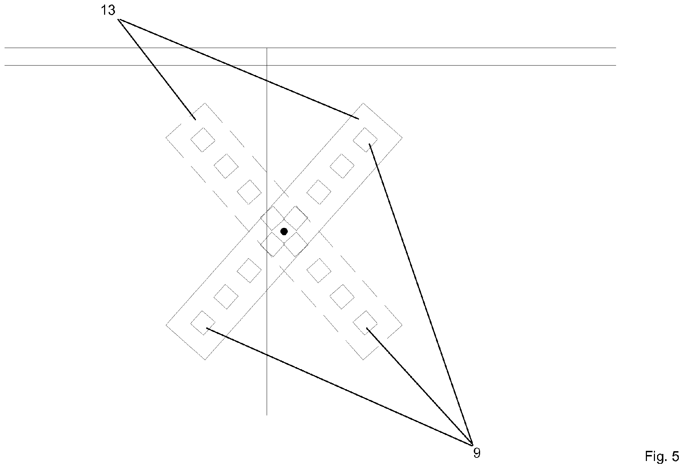

- Fig. 5: eine schematische Darstellung eines Trägerelementes, das um eine Vertikalachse auf einem Querträgerelement verschwenkbar gelagert ist.

Die in den Zeichnungsfiguren beispielhaft dargestellte Vorrichtung 1 dient zur Herstellung dreidimensionaler Objekte 2, durch sukzessives Verfestigen von Schichten eines mittels elektromagnetischer Strahlung oder Teilchenstrahlung verfestigbaren Aufbaumaterials 3 an den dem jeweiligen Querschnitt des Objektes 2 entsprechenden Stellen.

Die Vorrichtung 1 weist ein Gehäuse 5 auf, in welchem eine Baukammer 4 mit einer Tragevorrichtung 6 zum Tragen des Objektes 2 angeordnet ist. Eine Beschichtungsvorrichtung 7 dient zum schichtweisen Aufbringen des Aufbaumaterials 3.

Das aufgetragene Aufbaumaterial 3 kann durch eine Bestrahlungseinrichtung 8 zum Zwecke der Verfestigung an den dem jeweiligen Querschnitt des Objektes 2 entsprechenden Stellen bestrahlt werden, wobei die Bestrahlungseinrichtung 8 Scanner 9 zur Ablenkung der elektromagnetischen Strahlung 10 einer Strahlungsquelle umfasst, wobei die Strahlungsquelle ein Laser 11 ist. Der Scanner 9 ist über der Oberfläche der Baukammer 4 verfahrbar gelagert.

Gemäß der Erfindung ist nun eine Mehrzahl von Scannern 9 nebeneinanderliegend an wenigstens einem über der Baukammer 4 in einer ersten Richtung 12 verfahrbaren Trägerelement 13 gelagert, wobei die Scanner 9 gleichzeitig betrieben werden können und derart ausgebildet sind, dass beim Verfahren des Trägerelementes 13 in der ersten Richtung 12 unter den ersten Scannern 9 liegende Bereiche 14 mit zeilenartigen Energieeinträgen 15 beaufschlagt werden, wobei die Richtung der zeilenartigen Energieeinträge 15 zu der durch Verfahren des Trägerelementes 13 definierten ersten Richtung 12 einen Winkel einschließt.

Wenn davon gesprochen wird, dass die Bereiche 14 unter den Scannern 9 liegen sollen, so wird damit auch umfasst, dass die Scanner 9 flächenmäßig kleiner sind als die Bereiche 14 und der aus den Scannern 9 nach unten austretende Strahl auch schräg auf das Baufeld fallen kann, sodass die Bereiche 14 deutlich größer gewählt werden können als die Scanner 9. Dies bedeutet, dass ein Scanner 9 auch Nachbarbereiche mit bestrahlen kann, sodass ein Überlapp der Energieeinträge 15 an den Rändern der Bereiche 14 erfolgen kann.

Vorteilhaft ist die Mehrzahl der Scanner 9 äquidistant auf dem Trägerelement 13 angeordnet. Die Scanner 9 sind idealer Weise als Zeilenscanner ausgebildet, deren Spiegel eine Strahlablenkung in nur einer Richtung bewirken.

In Weiterbildung der Erfindung werden jedem Bereich 14 zwei Scanner 9 zugeordnet, durch welche der unter ihnen oder schräg unter ihnen liegende streifenartige Bereich selektiv mit zeilenartigen Energieeinträgen 15 unterschiedlicher Richtung beaufschlagt werden kann. Der eine Scanner 9 sorgt in einer Schicht für eine erste Richtung von Energieeinträgen 15, der zweite Scanner 9 bei Belichtung der nachfolgenden Schicht für Energieeinträge 15, die zu den ersten Energieeinträgen 15 winkelig liegen.

Die Mehrzahl der Scanner 9 kann einzeln in Gruppe oder in ihrer Gesamtheit verschwenkt oder verdreht auf dem Trägerelement 13 gelagert sein. Dadurch lässt sich die Richtung der durch die Scanner 9 erzeugten zeilenartigen Energieeinträge 15 verändern. Erfindungsgemäß ist das Trägerelement 13 zur Veränderung der zeilenartigen Energieeinträge 15 insgesamt verschwenkbar gelagert.

In Weiterbildung der Erfindung ist das langgestreckte Trägerelement 13 in seiner Längsrichtung verschiebbar gelagert. In einer ersten Verschiebestellung liegt damit ein Scanner 9 über einem Bereich 14 und beleuchtet diesen, wird dann die Verschiebestellung geändert, dann liegt ein benachbarter Scanner 9 über demselben Bereich 14 und kann diesen mit Energieeinträgen 15 mit einer anderen Ausrichtung bestrahlen.

Die Scanner 9 können einzeln oder in Gruppen an den Ausgang einer Strahlungsquelle, nämlich eines Lasers 11 angekoppelt werden.

Es ist aber auch möglich, die Scanner über Strahlteilerelemente mit wenigstens einem Ausgang, wenigstens einer Strahlungsquelle (Laser 11) zu verbinden.

Die Scanner 9 können auch auf wenigstens zwei langgestreckten Trägerelementen 13 angeordnet werden. Die parallel in der ersten Richtung 12 verfahrbar sind.

Über oder unter der Verfahrebene 20 des wenigstens einen Trägerelementes 13 ist eine weitere Trägerelementanordnung 21 vorgesehen, an welcher ein in der ersten Richtung 12 als auch rechtwinkelig dazu verfahrbares Strahlablenkungselement 22 angeordnet ist. Das Strahlablenkungselement 22 kann als feststehender Spiegel oder Prisma ausgebildet sein, um einen in es eintretenden Laserstrahl nur rechtwinkelig nach unten abzulenken. Alternativ dazu kann das wenigstens ein Strahlablenkungselement 22 aber auch als weiterer Scanner 9 ausgebildet sein.

### BEZUGSZEICHENLISTE

- 1: Vorrichtung
- 2: Objekt
- 3: Aufbaumaterial
- 4: Gehäuse
- 5: Baukammer
- 6: Tragevorrichtung
- 7: Beschichtungsvorrichtung
- 8: Bestrahlungseinrichtung
- 9: Scanner
- 10: Strahl
- 11: Laser
- 12: erste Richtung
- 13: Trägerelement
- 14: Bereich
- 15: Energieeintrag

- 20: Verfahrebene
- 21: Trägerelementanordnung
- 22: Strahlablenkungselement

## Patentansprüche

1. Vorrichtung (1) zur Herstellung dreidimensionaler Objekte (2) durch sukzessives Verfestigen von Schichten eines mittels elektromagnetischer Strahlung oder Teilchenstrahlung verfestigbaren Aufbaumaterials (3) an den dem jeweiligen Querschnitt des Objektes (2) entsprechenden Stellen, mit
- einem Gehäuse (5),
- einer Baukammer (4) innerhalb des Gehäuses (5), mit einer Tragevorrichtung (6) zum Tragen des Objektes (2),
- einer Beschichtungsvorrichtung (7) zum schichtweisen Aufbringen des Aufbaumaterials (3),
- einer Bestrahlungseinrichtung (8) zum Bestrahlen der aufgetragenen Schicht des Aufbaumaterials (3) an den dem jeweiligen Querschnitt des Objektes (2) entsprechenden Stellen, wobei
- die Bestrahlungseinrichtung (8) wenigstens einen Scanner (9) zur Ablenkung der elektromagnetischen Strahlung (10) oder Teilchenstrahlung einer Strahlungsquelle umfasst, der über der Baukammer (4) verfahrbar gelagert ist, wobei - eine Mehrzahl von Scannern (9) nebeneinanderliegend an wenigstens einem über der Baukammer (4) in einer ersten Richtung (12) verfahrbaren Trägerelement (13) gelagert sind, -- die gleichzeitig betreibbar und derart ausgebildet sind, dass beim Verfahren des Trägerelementes (13) in der ersten Richtung (12) unter den Scannern (9) liegende Bereiche (14) mit insbesondere zeilenartigen Energieeinträgen (15) beaufschlagbar sind, wobei -- die Richtung der zeilenartigen Energieeinträge (15) zu der durch Verfahren des Trägerelementes (13) definierten ersten Richtung (12), einen Winkel einschließt, **dadurch gekennzeichnet, dass** das Trägerelement (13) insgesamt verschwenkbar gelagert ist.

2. Vorrichtung nach Anspruch 1, **dadurch gekennzeichnet, dass** die Mehrzahl der Scanner (9) äquidistant auf dem Trägerelement (13) angeordnet ist.

3. Vorrichtung nach Anspruch 2, **dadurch gekennzeichnet, dass** die Scanner (9) als Zeilenscanner ausgebildet sind, deren Spiegel eine Strahlablenkung in nur einer Richtung bewirken.

4. Vorrichtung nach Anspruch 3, **dadurch gekennzeichnet, dass** jedem Bereich (14) wenigstens zwei Scanner (9) zugeordnet sind, durch welche der unter ihnen liegende Bereich (14) selektiv mit zeilenartigen Energieeinträgen (15) unterschiedlicher Richtung beaufschlagbar ist.

5. Vorrichtung nach einem der vorhergehenden Ansprüche, **dadurch gekennzeichnet, dass** die Mehrzahl der Scanner (9) einzeln, in Gruppen oder in ihrer Gesamtheit derart verschwenkbar oder verdrehbar auf dem Trägerelement (13) gelagert sind, dass die Richtung der durch sie erzeugten zeilenartigen Energieeinträge (15) veränderbar ist.

6. Vorrichtung nach einem der vorhergehenden Ansprüche, **dadurch gekennzeichnet, dass** das langgestreckte Trägerelement (13) in seiner Längsrichtung verschiebbar gelagert ist.

7. Vorrichtung nach einem der vorhergehenden Ansprüche, **dadurch gekennzeichnet, dass** die Scanner (9) einzeln oder in Gruppen an den Ausgang einer Strahlungsquelle (10) ankoppelbar sind.

8. Vorrichtung nach einem der vorhergehenden Ansprüche, **dadurch gekennzeichnet, dass** die Scanner (9) über Strahlteilerelemente mit wenigstens einem Ausgang wenigstens einer Strahlungsquelle (10) verbunden sind.

9. Vorrichtung nach einem der vorhergehenden Ansprüche, **dadurch gekennzeichnet, dass** wenigstens zwei Gruppen von Scannern (9) auf wenigstens zwei langgestreckten Trägerelementen (13) angeordnet sind, die in der ersten Richtung (12) verfahrbar sind.

10. Vorrichtung nach einem der vorhergehenden Ansprüche, **dadurch gekennzeichnet, dass** über oder unter der Verfahrebene (20) des wenigstens einen Trägerelementes (13) eine weitere Trägerelementanordnung (21) vorgesehen ist, an welcher wenigstens ein sowohl in der ersten Richtung (12) als auch rechtwinkelig dazu verfahrbares Strahlablenkungselement (22) angeordnet ist.

11. Vorrichtung nach einem der vorhergehenden Ansprüche, **dadurch gekennzeichnet, dass** das wenigstens eine Strahlablenkungselement (22) als Scanner (9) ausgebildet ist.

12. Verfahren zur Herstellung dreidimensionaler Objekte (2) durch sukzessives Verfestigen von Schichten eines mittels elektromagnetischer Strahlung oder Teilchenstrahlung verfestigbaren Aufbaumaterials (3) an den dem jeweiligen Querschnitt des Objektes (2) entsprechenden Stellen, mit folgenden Verfahrensschritten:
- Vorsehen einer SLS- (selektives Lasersintern) oder SLM-(selektives Laserschmelzen) Vorrichtung (1) mit einer Baukammer (4), in der eine höhenverstellbare Tragevorrichtung (6) zum Tragen des Objektes (2) angeordnet ist, einer Beschichtungsvorrichtung (7) zum schichtweisen Aufbringen des Aufbaumaterials (3) und einer Bestrahlungseinrichtung (8) zum Bestrahlung aufgetragener Schichten des Aufbaumaterials (3) an den dem jeweiligen Querschnitt des Objektes (2) entsprechenden Stellen, wobei über einen Scanner (9) ein Strahl (10) einer elektromagnetischen Strahlung oder Teilchenstrahlung rechnergesteuert abgelenkt wird, wobei simultan über eine Mehrzahl von nebeneinander liegenden und im Wesentlichen quer zu ihrer Anordnung in einer ersten Richtung (12) verfahrbaren Scannern (9) die Belichtung der zu verfestigenden Schicht erfolgt und wobei die nebeneinanderliegenden Scanner (9) unter ihnen liegende Bereiche (14) mit zeilenartigen Energieeinträgen (15) beaufschlagen, wobei die Richtung der zeilenartigen Energieeinträge (15) zu der ersten Richtung (12) unterschiedlich ist, **dadurch gekennzeichnet, dass** die Gesamtanordnung der Scanner (9) durch Verschwenken eines sie tragenden Trägerelementes (13) verändert wird.

13. Verfahren nach Anspruch 12, **dadurch gekennzeichnet, dass** die in Reihe nebeneinander liegenden Scanner (9) eine Strahlablenkung in nur einer Richtung bewirken.

14. Verfahren nach Anspruch 12 oder 13, **dadurch gekennzeichnet, dass** nach zeilenartigen Energieeinträgen (15) durch die Scanner (9) in die unter den Scannern (9) liegenden Bereiche (14) die Teilverfestigung der nächsten Schicht mit hinsichtlich ihrer Richtung unterschiedlichen zeilenartigen Energieeinträgen (15) erfolgt, wozu die Scanner (9) entweder einzeln oder kollektiv auf dem Trägerelement verdreht oder verschwenkt werden.

## Claims

1. Device (1) for the production of three-dimensional objects (2) by successively solidifying layers of a building material (3) that can be solidified by means of electromagnetic radiation or particle radiation at the locations corresponding to the respective cross section of the object (2), comprising
- a housing (5),
- a building chamber (4) within the housing (5), comprising a supporting device (6) for supporting the object (2),
- a coating device (7) for applying the building material (3) layer by layer,
- an irradiating device (8) for irradiating the applied layer of the building material (3) at the locations corresponding to the respective cross section of the object (2), wherein
- the irradiating device (8) comprises at least one scanner (9) for deflecting the electromagnetic radiation (10) or particle radiation of a radiation source, which scanner is mounted movably over the building chamber (4), wherein - a plurality of scanners (9) lying next to one another are mounted on at least one support element (13) that is movable over the building chamber (4) in a first direction (12) - which can be operated simultaneously and are formed in such a way that, when the support element (13) is being moved in the first direction (12), regions (14) lying under the scanners (9) can be subjected to in particular line-like inputs of energy (15), wherein - the direction of the line-like inputs of energy (15) in relation to the first direction (12), defined by moving of the support element (13), forms an angle, **characterized in that** the support element (13) altogether is pivotably mounted.

2. Device according to Claim 1, **characterized in that** the plurality of scanners (9) are arranged equidistantly on the support element (13).

3. Device according to Claim 2, **characterized in that** the scanners (9) are formed as line scanners, the mirrors of which bring about a beam deflection in only one direction.

4. Device according to Claim 3, **characterized in that** each region (14) is assigned at least two scanners (9), by which the region (14) lying under them can be selectively subjected to line-like inputs of energy (15) of different directions.

5. Device according to one of the preceding claims, **characterized in that** the plurality of scanners (9) are mounted pivotably or rotatably on the support element (13) individually, in groups or in their entirety in such a way that the direction of the line-like inputs of energy (15) generated by them is variable.

6. Device according to one of the preceding claims, **characterized in that** the elongated support element (13) is mounted displaceably in its longitudinal direction.

7. Device according to one of the preceding claims, **characterized in that** the scanners (9) are able to be coupled to the output of a radiation source (10) individually or in groups.

8. Device according to one of the preceding claims, **characterized in that** the scanners (9) are connected by way of beam-splitter elements to at least one output of at least one radiation source (10).

9. Device according to one of the preceding claims, **characterized in that** at least two groups of scanners (9) are arranged on at least two elongated support elements (13), which are movable in the first direction (12).

10. Device according to one of the preceding claims, **characterized in that** over or under the plane of movement (20) of the at least one support element (13) there is provided a further support element arrangement (21), on which at least one beam-deflecting element (22) that is movable both in the first direction (12) and at right angles thereto is arranged.

11. Device according to one of the preceding claims, **characterized in that** the at least one beam-deflecting element (22) is formed as a scanner (9).

12. Method for the production of three-dimensional objects (2) by successively solidifying layers of a building material (3) that can be solidified by means of electromagnetic radiation or particle radiation at the locations corresponding to the respective cross section of the object (2), comprising the following method steps:
- providing an SLS (selective laser sintering) or SLM (selective laser melting) device (1) comprising a building chamber (4), in which a height-adjustable supporting device (6) for supporting the object (2) is arranged, a coating device (7) for applying the building material (3) layer by layer and an irradiating device (8) for irradiating applied layers of the building material (3) at the locations corresponding to the respective cross section of the object (2), wherein a beam (10) of an electromagnetic radiation or particle radiation is deflected in a computer-controlled manner by way of a scanner (9), wherein the exposure of the layer to be solidified takes place simultaneously by way of a plurality of scanners (9) that are lying next to one another and are movable substantially transversely in relation to their arrangement in a first direction (12) and wherein the scanners (9) lying next to one another subject regions (14) lying under them to line-like inputs of energy (15), wherein the direction of the line-like inputs of energy (15) is different from the first direction (12), **characterized in that** the overall arrangement of the scanners (9) is varied by pivoting a support element (13) supporting them.

13. Method according to Claim 12, **characterized in that** the scanners (9) lying in series next to one another bring about a beam deflection in only one direction.

14. Method according to Claim 12 or 13, **characterized in that,** after line-like inputs of energy (15) by the scanners (9) into the regions (14) lying under the scanners (9), the partial solidification of the next layer takes place with line-like inputs of energy (15) that are different with regard to their direction, for which purpose the scanners (9) are rotated or pivoted either individually or collectively on the support element.

## Revendications

1. Dispositif (1) pour la fabrication d'objets tridimensionnels (2) par durcissement successif de couches d'un matériau de construction (3) durcissable au moyen d'un rayonnement électromagnétique ou d'un rayonnement de particules aux endroits correspondant à la section transversale respective de l'objet (2), comportant :
- un boîtier (5),
- une chambre de construction (4) à l'intérieur du boîtier (5), munie d'un dispositif de support (6) destiné à porter l'objet (2),
- un dispositif de revêtement (7) destiné à déposer le matériau de construction (3) en couches,
- un moyen d'exposition (8) destiné à exposer la couche déposée du matériau de construction (3) aux endroits correspondant à la section transversale respective de l'objet (2), dans lequel
- le moyen d'exposition (8) comprend au moins un dispositif de balayage (9) destiné à dévier le rayonnement électromagnétique (10) ou le rayonnement de particules d'une source de rayonnement qui est montée de manière à pouvoir être déplacée sur la chambre de construction (4), dans lequel
- de multiples dispositifs de balayage (9) sont montés de manière juxtaposée sur au moins un élément de support (13) pouvant être déplacé sur la chambre de construction (4) dans une première direction (12), lesquels dispositifs peuvent être mis en fonctionnement simultanément et sont réalisés de manière à ce que, lors d'un déplacement de l'élément de support (13) dans la première direction (12), des zones (14) situées sous les dispositifs de balayage (9) puissent être soumises à des apports d'énergie (15) notamment linéaires, dans lequel la direction des apports d'énergie linéaires (15) délimite un angle par rapport à la première direction (12) définie par le déplacement de l'élément de support (13),
**caractérisé en ce que** l'élément de support (13) est monté de manière à pouvoir pivoter dans son ensemble.

2. Dispositif selon la revendication 1, **caractérisé en ce que** les multiples dispositifs de balayage (9) sont agencés de manière équidistante sur l'élément de support (13).

3. Dispositif selon la revendication 2, **caractérisé en ce que** les dispositifs de balayage (9) sont réalisés sous la forme de dispositifs de balayage linéaires dont les miroirs provoquent une déviation du faisceau dans une seule direction.

4. Dispositif selon la revendication 3, **caractérisé en ce qu'**à chaque zone (14) sont associés au moins deux dispositifs de balayage (9) au moyen desquels la zone (14) située sous ceux-ci peut être soumise sélectivement à des apports d'énergie linéaires (15) dans des directions différentes.

5. Dispositif selon l'une quelconque des revendications précédentes, **caractérisé en ce que** les multiples dispositifs de balayage (9) sont montés sur l'élément de support (13) afin qu'ils puissent être amenés à pivoter ou à tourner individuellement, par groupes ou dans leur ensemble, afin de pouvoir modifier la direction des apports d'énergie linéaires (15) générés par ceux-ci.

6. Dispositif selon l'une quelconque des revendications précédentes, **caractérisé en ce que** l'élément de support allongé (13) est monté de manière à pouvoir être décalé dans sa direction longitudinale.

7. Dispositif selon l'une quelconque des revendications précédentes, **caractérisé en ce que** les dispositifs de balayage (9) peuvent être couplés individuellement ou par groupes à la sortie d'une source de rayonnement (10).

8. Dispositif selon l'une quelconque des revendications précédentes, **caractérisé en ce que** les dispositifs de balayage (9) sont reliés à au moins une source de rayonnement (10) par l'intermédiaire d'éléments diviseurs de faisceaux.

9. Dispositif selon l'une quelconque des revendications précédentes, **caractérisé en ce qu'**au moins deux groupes de dispositifs de balayage (9) sont disposés sur au moins deux éléments de support allongés (13) qui peuvent être déplacés dans la première direction (12).

10. Dispositif selon l'une quelconque des revendications précédentes, **caractérisé en ce qu'**il est prévu sur ou sous le plan de déplacement (20) de l'au moins un élément de support (13), un autre agencement d'éléments de support (21) sur lequel est disposé au moins un élément de déviation de faisceau (22) pouvant être déplacé aussi bien dans la première direction (12) que perpendiculairement à celle-ci.

11. Dispositif selon l'une quelconque des revendications précédentes, **caractérisé en ce que** l'au moins un élément de déviation de faisceau (22) est réalisé sous la forme d'un dispositif de balayage (9).

12. Procédé pour la fabrication d'objets tridimensionnels (2) par durcissement successif de couches d'un matériau de construction (3) durcissable au moyen d'un rayonnement électromagnétique ou d'un rayonnement de particules aux endroits correspondant à la section transversale respective de l'objet (2), comportant les étapes de procédé suivantes :
- munir un dispositif (1) SLS (frittage sélectif par laser) ou SLM (fusion sélective par laser) d'une chambre de construction (4) dans laquelle est disposé un dispositif de support réglable en hauteur (6) destiné à porter l'objet (2), d'un dispositif de revêtement (7) destiné à déposer le matériau de construction (3) en couches et d'un moyen d'exposition (8) destiné à exposer des couches déposées du matériau de construction (3) aux endroits correspondant à la section transversale respective de l'objet (2), dans lequel un faisceau (10) d'un rayonnement électromagnétique ou d'un rayonnement de particules est dévié par l'intermédiaire d'un dispositif de balayage (9) de manière commandée par ordinateur, dans lequel l'éclairement de la couche devant être durcie est effectué simultanément par l'intermédiaire d'une pluralité de dispositifs de balayage (9) juxtaposés et pouvant être déplacés sensiblement transversalement à leur agencement dans une première direction (12) et dans lequel les dispositifs de balayage (9) juxtaposés soumettent des zones (14) situées sous ceux-ci à des apports d'énergie linéaires (15), dans lequel la direction des apports d'énergie linéaires (15) est différente de la première direction (12),
**caractérisé en ce que** l'agencement global des dispositifs de balayage (9) est modifié par pivotement d'un élément de support (13) portant ces derniers.

13. Procédé selon la revendication 12, **caractérisé en ce que** les dispositifs de balayage (9) juxtaposés en rangée provoquent une déviation de faisceau dans une seule direction.

14. Procédé selon la revendication 12 ou 13, **caractérisé en ce qu'**après les apports d'énergie linéaires (15) par les dispositifs de balayage (9) dans les zones (14) situées sous les dispositifs de balayage (9), le durcissement de la couche suivante est effectué au moyen d'apports d'énergie linéaires (15) dont les directions sont différentes, les dispositifs de balayage (9) étant à cet effet soumis à une rotation ou à un pivotement individuel ou collectif sur l'élément de support.
